# EUROPEAN PATENT APPLICATION

(11) **EP 4 210 137 A1**
(43) Date of publication of application: **12.07.2023**
(21) Application number: 22213354.8
(22) Date of filing: 14.12.2022
(51) Int. Cl.: H01M 10/04, H01M 50/105

(54) **BATTERY**

(30) Priority: 05.01.2022 JP 2022000549
(71) Applicant: TOYOTA JIDOSHA KABUSHIKI KAISHA, Aichi-Ken 471-8571 (JP)
(72) Inventor: KAGAMI, Ryo, Toyota-shi, Aichi-ken, 471-8571 (JP)
(74) Representative: J A Kemp LLP

(57) **Abstract**

A battery (10) includes an outer encasement member (11) configured to accommodate an electrode body (14) that is quadrilateral in plan view. The outer encasement member (11) has a recessed portion (12a) that is quadrilateral in plan view and configured to accommodate the electrode body (14), and is provided with a joint portion (11a) at an outer peripheral end portion. A corner portion of the recessed portion (12a) is provided with a projection (15) extending toward the joint portion (11a).

## Description

### BACKGROUND OF THE INVENTION

### 1. Field of the Invention

The present disclosure relates to a battery having an electrode body and an outer encasement member that seals the electrode body.

### 2. Description of Related Art

Japanese Unexamined Patent Application Publication No. 2004-39271 (JP 2004-39271 A) discloses a battery having a configuration in which a rectangular electrode body is sealed by a laminate film (outer encasement member), and in which spacers are disposed between corner portions of the rectangular electrode body and the laminate film. Description is made therein that concentration of wrinkles, particularly at corner portions of the laminate film, is suppressed thereby, whereby damage to a metal foil layer of the laminate film can be curbed, and deterioration of battery performance can be suppressed.

### SUMMARY OF THE INVENTION

However, even when spacers such as those described in JP 2004-39271 A are disposed, a phenomenon in which wrinkles occur at the corner portions has been confirmed, and there are instances in which the laminate film is damaged.

In view of the related art described above, the present disclosure provides a battery in which occurrence of wrinkles at corner portions of the joint portion of the outer encasement member is suppressed, and occurrence of damage to the outer encasement member is suppressed.

An aspect of the present disclosure provides a battery. Disclosed is a battery in which an electrode body that is quadrilateral in plan view is accommodated in an outer encasement member. The outer encasement member has a recessed portion that is quadrilateral in plan view and configured to accommodate the electrode body, and is provided with a joint portion at an outer peripheral end portion, and a corner portion of the recessed portion is provided with a projection extending toward the joint portion.

In the battery of the aspect described above, the projection may be configured to define a hollow between the joint portion and the electrode body inside the outer encasement member.

In the battery of the aspect described above, the outer encasement member may include a first outer encasement member and a second outer encasement member. The joint portion may be configured by joining an outer peripheral end portion of the first outer encasement member and an outer peripheral end portion of the second outer encasement member.

In the battery of the above aspect, the projection may include an inclined face that is inclined toward the joint portion in a thickness direction of the battery.

According to the battery of the present disclosure, strength of the corner portions of the recessed portion can be increased, excess of the outer encasement member that causes wrinkles to occur can be taken up, and damage to the outer encasement member can be suppressed.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is an external perspective view of an all-solid-state battery 10;
FIG. 2A is a plan view of the all-solid-state battery 10;
FIG. 2B is an enlarged view of a part of FIG. 2A;
FIG. 3A is a front view of the all-solid-state battery 10;
FIG. 3B is an enlarged view of a part of FIG. 3A;
FIG. 4A is a side view of the all-solid-state battery 10;
FIG. 4B is an enlarged view of a part of FIG. 4A;
FIG. 5 is a disassembled perspective view of the all-solid-state battery 10;
FIG. 6 is a sectional view taken along line VI-VI;
FIG. 7 is a diagram illustrating a form of a projection 15 according to another example;
FIG. 8 is a diagram illustrating the form of the projection 15 according to another example;
FIG. 9 is a diagram illustrating an all-solid-state battery according to another embodiment;
FIG. 10 is a diagram showing results of a comparative example; and
FIG. 11 is a diagram showing results of an example.

### DETAILED DESCRIPTION OF EMBODIMENTS

### 1. Battery

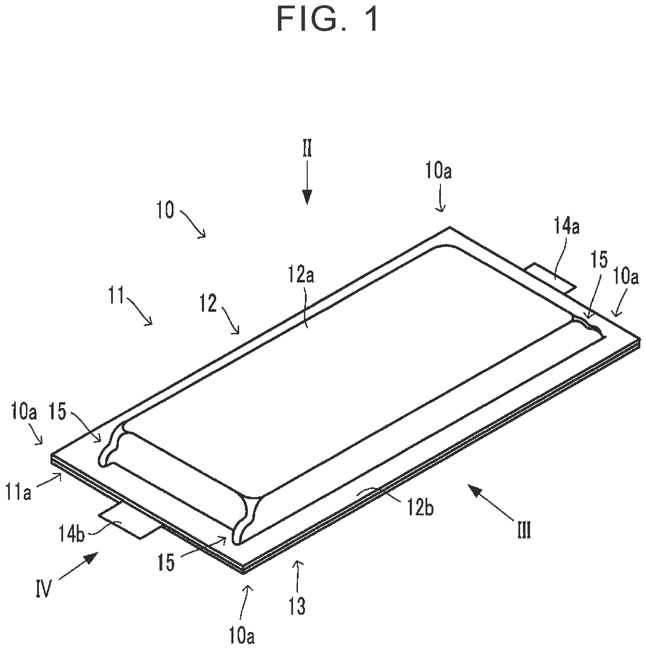

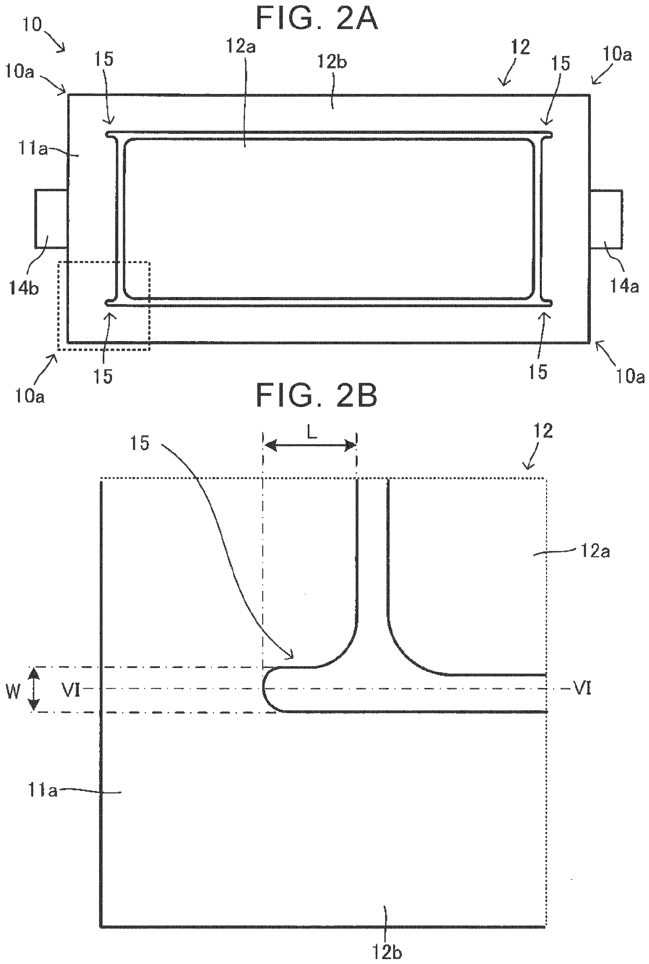

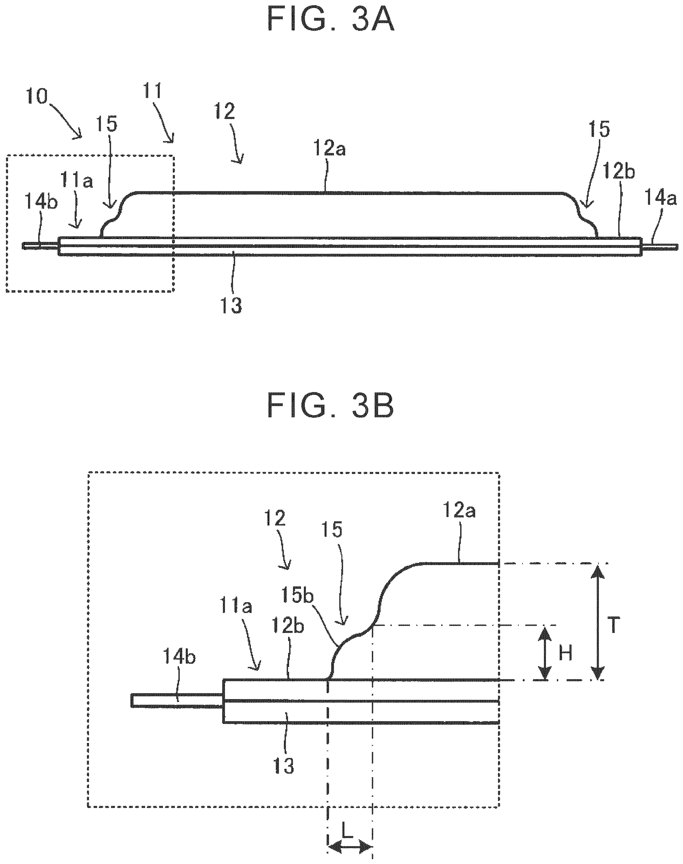

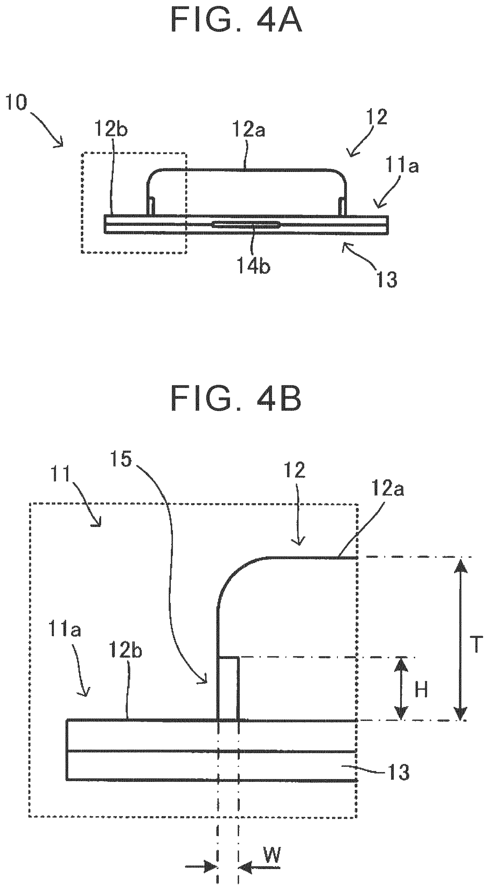

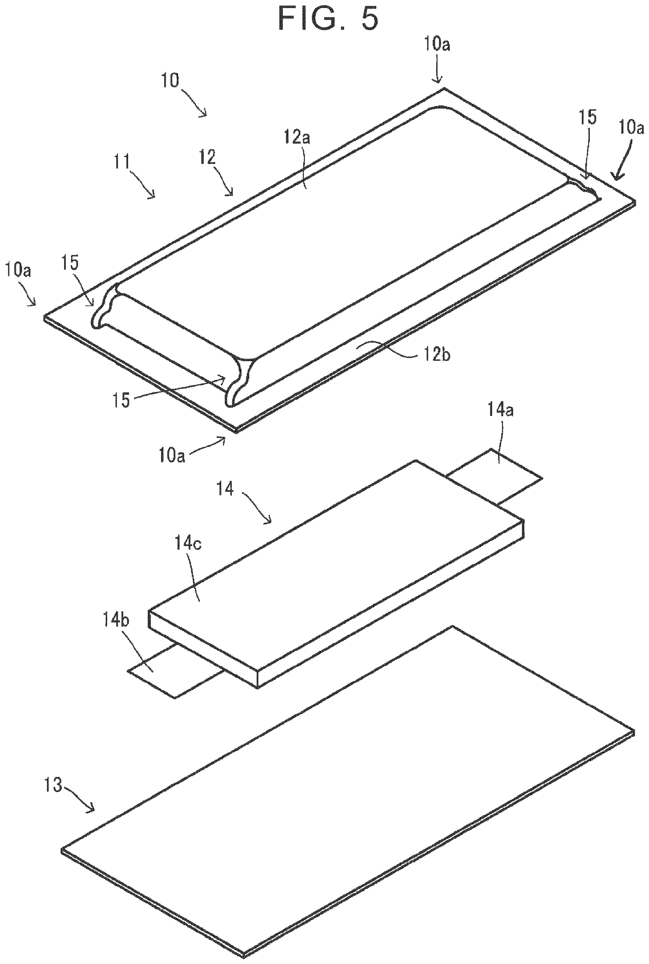

FIGS. 1 to 6 are diagrams illustrating an all-solid-state battery 10 according to an embodiment. Here, an all-solid-state battery will be described as a typical example, but the present disclosure does not necessarily have to be an all-solid-state battery, and application can be made to a battery that has an electrode body and an outer encasement member sealing the electrode body. FIG. 1 is an external perspective view, FIG. 2A is a plan view (as viewed from a direction of arrow II in FIG. 1), FIG. 2B is an enlarged view of a portion surrounded by a dotted line in FIG. 2A, FIG. 3A is a front view (as viewed from a direction of arrow III in FIG. 1), FIG. 3B is an enlarged view of a portion surrounded by a dotted line in FIG. 3A, FIG. 4A is a side view (as viewed from a direction of arrow IV in FIG. 1), FIG. 4B is an enlarged view of a portion surrounded by a dotted line in FIG. 4A, and FIG. 5 is a disassembled perspective view.

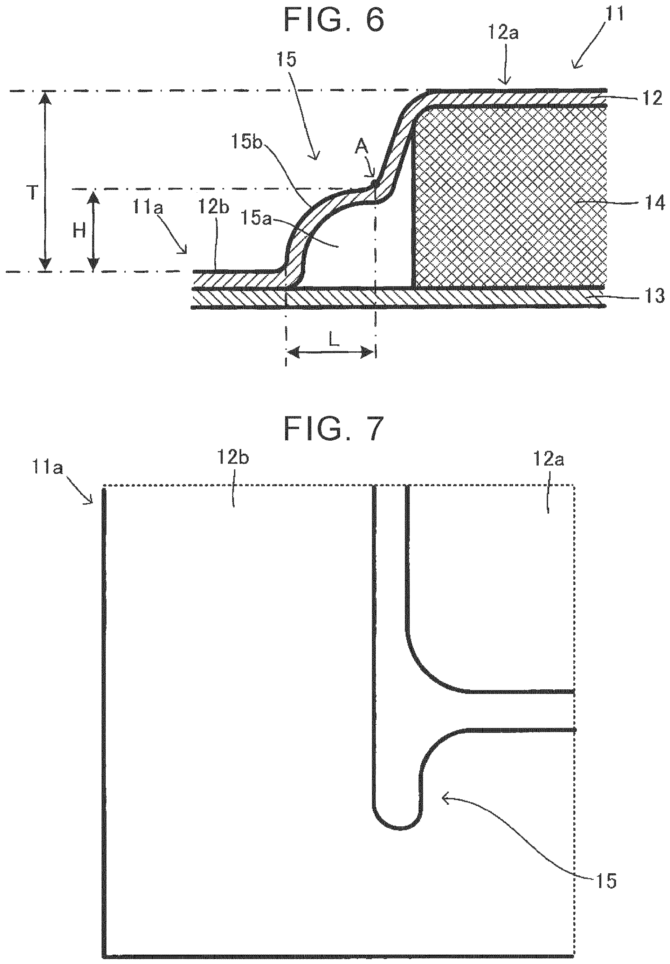

FIG. 6 is part of a sectional view taken along line VI-VI in FIG. 2B.

As can be seen from FIGS. 1 to 6, the all-solid-state battery 10 according to the present embodiment has an outer encasement member 11 (a first outer encasement member 12 and a second outer encasement member 13), and an electrode body 14. The electrode body 14, which is generally quadrilateral in plan view, is enclosed within the outer encasement member 11, which is generally quadrilateral in plan view. Also, an anode terminal 14a and a cathode terminal 14b extend from the electrode body 14, and are disposed such that tip ends thereof protrude from the outer encasement member 11.

Each of the configurations, and relations thereof, will be described below.

### 1.1. Outer Encasement Member

In the present embodiment, the outer encasement member 11 is made up of a sheet-like member that is quadrilateral in plan view, and in the present embodiment, the outer encasement member 11 includes the first outer encasement member 12 and the second outer encasement member 13. The electrode body 14 is enclosed between the first outer encasement member 12 and the second outer encasement member 13, and an outer peripheral end portion of the first outer encasement member 12 and an outer peripheral end portion of the second outer encasement member 13 are joined to form a joint portion 11a. Accordingly, this outer encasement member 11 has a pouch shape, and the electrode body 14 is enclosed and sealed therein.

The first outer encasement member 12 has a quadrilateral shape in plan view, and has a recessed portion 12a that is quadrilateral in plan view (an opening of the recessed portion 12a is on lower side face in the plane of the drawing in the view in FIG. 5, and thus is hidden from sight), and the electrode body 14 is accommodated within the recessed portion 12a. A flared portion 12b is provided flaring outward from an outer peripheral edge of the recessed portion 12a, and the flared portion 12b and the outer peripheral end portion of a surface of the second outer encasement member 13 are joined to form the joint portion 11a.

The second outer encasement member 13 has a quadrilateral sheet-like shape in plan view. As described above, the outer peripheral end portion of a face of the second outer encasement member 13 facing the flared portion 12b of the first outer encasement member 12 is overlaid with and joined to the flared portion 12b of the first outer encasement member 12, thereby forming the joint portion 11a.

In the present embodiment, the first outer encasement member 12 and the second outer encasement member 13 are made of laminate films. Now, a laminate film is a film having a metal layer and a sealant material layer. Examples of metal and so forth used for the laminate films include aluminum and stainless steel, and examples of material used for the sealant material layer include polypropylene, polyethylene, polystyrene, polyvinyl chloride, and so forth, which are thermoplastic resins.

The method of joining the first outer encasement member 12 and the second outer encasement member 13, i.e., the method of joining the laminate films, is not limited in particular, and known methods can be used. Specific examples thereof include a method of welding the sealant material layers of the laminate films to each other (e.g., hot plate welding, ultrasound welding, vibration welding, laser welding, or the like) and adhesion by an adhesive.

In the present embodiment, the first outer encasement member 12 of the outer encasement member 11 has the following configuration.

The first outer encasement member 12 is provided with projections 15 at corner portions of the recessed portion 12a that is quadrilateral in plan view, at positions corresponding to corners 10a of the all-solid-state battery 10. Accordingly, in the present embodiment, a total of four projections 15 are provided, one at each corner portion.

The projections 15 are portions that are continuous with the recessed portion 12a and protrude from the corner portions of the recessed portion 12a, and are formed between the joint portion 11a and the recessed portion 12a. In the present embodiment, the projections 15 are dome-shaped, so as to say, and form hollows 15a surrounded by the projections 15, the second outer encasement member 13, and the electrode body 14, as illustrated in FIG. 6.

While the specific shapes of the projections 15 are not particularly limited as long as the shapes are such that the hollows 15a are formed, the projections 15 can take up the excess material that causes wrinkles in the outer encasement member 11 from twisting, due to the projections 15 being formed between the joint portion 11a and the recessed portion 12a at the corner portions of the recessed portion 12a, thereby suppressing occurrence of wrinkles.

The projections 15 preferably have a certain level of size, in order to suppress the occurrence of wrinkles at the corner portions of the recessed portion 12a (to take up the excess due to the twisting of the material). That is to say, in the present embodiment, the projections 15 protrude from the recessed portion 12a in each of plan view form (FIG. 2B) and front view form (FIG. 3B).

The height H of the projections 15 illustrated in FIGS. 3B, 4B and 6 is, with respect to T that represents the thickness of the recessed portion 12a, at least H < T, preferably is 0.2 times to 0.8 times the size thereof, and even more preferably is 0.4 times to 0.6 times.

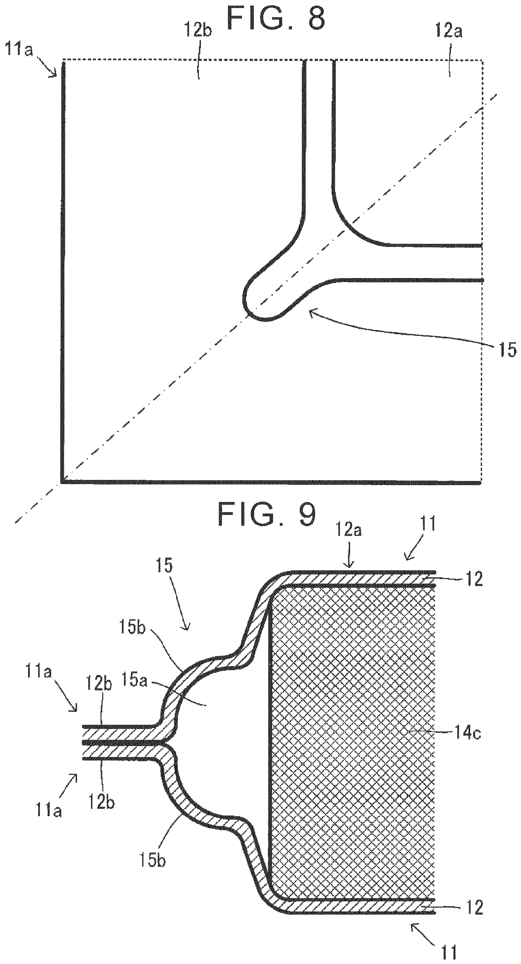

It is sufficient for the protrusion of the projections 15 in plan view (the protrusion indicated by L in FIGS. 2B, 3B, and 6) to extend from the corner portion of the recessed portion 12a toward the joint portion 11a. The direction thereof is not limited in particular, and in the present embodiment, the projections 15 are configured extending along a long axis of the all-solid-state battery 10 that is rectangular in plan view. However, this is not restrictive, and the projections 15 may be configured extending along a short axis of the all-solid-state battery 10 that is rectangular in plan view as illustrated in FIG. 7, or the projections 15 may extend along diagonal lines of the all-solid-state battery 10 that is rectangular in plan view as illustrated in FIG. 8. Further, this is not restrictive either, and the projections 15 may be provided extending in directions therebetween.

The amount of protrusion of the projections 15 in plan view, indicated by L in FIGS. 2B, 3B, and 6 preferably is 1 mm or more, more preferably is 2 mm or more, and even more preferably is 3 mm or more. While not limited in particular, an upper limit of L preferably is 8 mm or less, and more preferably is 5 mm or less.

A width W of the projections 15 illustrated in FIGS. 2B and 4B in plan view preferably is 1 mm or more, more preferably is 2 mm or more, and even more preferably is 3 mm or more. While not limited in particular, an upper limit of W preferably is 8 mm or less, and more preferably is 5 mm or less.

As a more effective shape, as illustrated well in FIGS. 3B and 6, the projection 15 preferably has an inclined face 15b that is inclined toward the joint portion 11a in a thickness direction (the stacking direction of the layers in the electrode body 14). While not limited in particular, the shape of the inclined face 15b may be flat, or may be a convex face as illustrated in FIGS. 3B and 6. Forming the inclined face 15b as a convex face facilitates ensuring the size of the hollow 15a.

Also, the connecting portion between the projections 15 and other portions (recessed portion 12a and flared portion 12b), and the portion where the direction changes at the projection 15, are preferably connected by curved faces. Accordingly, stress concentration can be reduced, and occurrence of tearing can be further suppressed.

In this case, the boundaries between the projections 15 and other portions may become ambiguous, but essentially the projections 15 are portions that are located at the corner portions of the outer encasement member 11 and that protrude so as to extend toward the joint portion 11a of the first outer encasement member 12 and the second outer encasement member 13. Although not limiting in particular, the projection 15 may be a portion located on a tip end side of an inflection point A illustrated in FIG. 6, for example.

### 1.2. Electrode Body

The electrode body 14 has anode current collector layers, anode composite material layers, separator layers, cathode composite material layers, cathode current collector layers, the anode terminal 14a, and the cathode terminal 14b. In the present embodiment, the anode current collector layer, the anode composite material layer, the separator layer, the cathode composite material layer, the cathode current collector layer, the cathode composite material layer, the separator layer, the anode composite material layer, and the anode current collector layer, are laminated in this order, making up a unit element. A plurality thereof is stacked together (also referred to as "laminate 14c"), the anode terminal 14a is electrically connected to the anode current collector layer of the laminate 14c, and the cathode terminal 14b is electrically connected to the cathode current collector layer of the laminate 14c.

The laminate 14c also is quadrilateral in plan view.

### 1.2a. Anode Current Collector Layer

The anode current collector layer is laminated on the anode composite material layer, and collects electricity from the anode composite material layer. The anode current collector layer is foil-like and has a quadrilateral shape in plan view, and is, in the present embodiment, made up of an anode current collector foil that is a metal foil, and a carbon layer laminated on the anode current collector foil. The carbon layer is laminated on the anode composite material layer, whereby the anode current collector layer is laminated on the anode composite material layer.

Examples of the material making up the anode current collector foil include stainless steel, aluminum, nickel, iron, and titanium, and the carbon layer is made of a material containing carbon.

### 1.2b. Anode Composite Material Layer

The anode current collector layer is laminated on one surface of the anode composite material layer, and the separator layer is laminated on the other surface thereof. The anode composite material layer is sheet-like, and has a quadrilateral shape in plan view.

The anode composite material layer is a layer containing an anode active material, and may further contain at least one of a solid electrolyte material, a conductive material, and a binder, as necessary.

A known active material may be used as the anode active material. Examples include cobalt-based materials (LiCoO₂, etc.), nickel-based materials (LiNiO₂, etc.), manganese-based materials (LiMn₂O₄, Li₂Mn₂O₃, etc.), iron-phosphate-based materials (LiFePO₄, Li₂FeP₂O₇, etc.), NCA-based materials (nickel, cobalt, and aluminum compounds), NMC-based materials (compounds of nickel, manganese, and cobalt), and so forth. More specific examples include LiNi_{1/3}Co_{1/3}Mn_{1/3}O₂ and so forth.

The surface of the anode active material may be coated with an oxide layer such as a lithium niobate layer, a lithium titanate layer, a lithium phosphate layer, or the like.

The solid electrolyte is preferably an inorganic solid electrolyte. This is because ionic conductivity thereof is high and heat resistance thereof is excellent, as compared with organic polymer electrolytes. Examples of the inorganic solid electrolyte include sulfide solid electrolytes, oxide solid electrolytes, and so forth.

Examples of the sulfide solid electrolyte material having Lithium-ion conductivity include Li₂S-P₂S₅, Li₂S-P₂S₅-LiI, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (in which m and n are positive numerals, and Z is any of Ge, Zn, and Ga), Li₂S-GeS₂, Li₂S-SiS₂-Li₃PO₄, Li₂S-SiS₂-LiₓMO_{y} (in which x and y are positive numerals, and M is any of P, Si, Ge, B, Al, Ga, and In), and so forth. Note that the above notation "Li₂S-P₂S₅" means a sulfide solid electrolyte material using a raw material composition containing Li₂S and P₂S₅, and this holds true regarding other notations as well.

On the other hand, examples of the oxide solid electrolyte material having Lithium-ion conductivity include compounds having a NASICON (an acronym for sodium (Na) Super Ionic CONductor) type structure, and so forth. Examples of compounds having a NASICON type structure include a compound (LAGP) represented by the general formula Li₁₊ₓAlₓGe₂₋ₓ(PO₄)₃ (0 ≤ x ≤ 2), a compound (LATP) represented by a general formula Li₁₊ₓAlₓTi₂₋ₓ(PO₄)₃ (0 ≤ x ≤ 2), and so forth. Other examples of the oxide solid electrolyte material include LiLaTiO (e.g., Li_{0.34}La_{0.51}TiO₃), LiPON (e.g., Li_{2.9}PO_{3.3}N_{0.46}), LiLaZrO (e.g., Li₇La₃Zr₂O₁₂), and so forth.

The binder is not limited in particular as long as it is chemically and electrically stable, and examples thereof include a fluorine-based binder such as polyvinylidene fluoride (PVDF), polytetrafluoroethylene (PTFE), and so forth, rubber-based binders such as styrene-butadiene rubber (SBR) and so forth, olefin-based binders such as polypropylene (PP), polyethylene (PE), and so forth, and cellulose-based binders such as carboxymethyl cellulose (CMC) and so forth.

Examples of the conductive material that can be used include carbon materials such as acetylene black (AB), Ketjen black, carbon fiber, and so forth, and metal materials such as nickel, aluminum, stainless steel, and so forth.

The content of each component in the anode composite material layer may be the same as in conventional arrangements. Also, the thickness of the anode composite material layer preferably is, for example, no less than 0.1 µm and no more than 1 mm, and more preferably no less than 1 µm and no more than 150 µm.

### 1.2c. Separator layer

The separator layer (solid electrolyte layer) is sheet-like and has a quadrilateral shape in plan view, is disposed between the anode composite material layer and the cathode composite material layer, and is a layer containing the solid electrolyte material. The separator layer contains at least a solid electrolyte material. The solid electrolyte material can be thought of in the same way as the solid electrolyte material described regarding the anode composite material layer.

### 1.2d. Cathode Composite Material Layer

The cathode composite material layer is a layer containing at least a cathode active material. The cathode composite material layer may contain a binder, a conductive material, and a solid electrolyte material, as necessary. The binder, the conductive material, and the solid electrolyte material can be thought of in the same way as those in the anode composite material layer.

When making up a lithium-ion battery, examples of the cathode active material include carbon materials such as graphite, hard carbon, and so forth, various types of oxides such as lithium titanate and so forth, silicon (Si) and Si alloys, metallic lithium, lithium alloys, and so forth, but are not limited in particular thereto.

The cathode composite material layer is sheet-like and has a quadrilateral shape in plan view, with the separator layer laminated on one surface and the cathode current collector layer laminated on the other surface.

The content of each component in the cathode composite material layer may be the same as in conventional arrangements. Also, the thickness of the cathode composite material layer preferably is, for example, no less than 0.1 µm and no more than 1 mm, and more preferably no less than 1 µm and no more than 150 µm.

### 1.2e. Cathode Current Collector Layer

The cathode current collector layer is laminated on the cathode composite material layer and collects electricity from the cathode composite material layer. The cathode current collector layer is foil-like and has a quadrilateral shape in plan view, and can be made of, for example, stainless steel, copper, nickel, carbon, or the like.

### 1.2f. Anode Terminal, Cathode Terminal

The anode terminal 14a and the cathode terminal 14b are members that have conductivity, and each is a terminal for externally electrically connecting a respective pole. One end of the anode terminal 14a is electrically connected to the anode current collector layers, and the other end penetrates the joint portion 11a between the first outer encasement member 12 and the second outer encasement member 13 and is externally exposed.

One end of the cathode terminal 14b is electrically connected to the cathode current collector layers, and the other end penetrates the joint portion 11a between the first outer encasement member 12 and the second outer encasement member 13 and is externally exposed.

### 2. Regarding Manufacturing

The all-solid-state battery 10 can be fabricated by a known method.

As described above, the electrode body 14 is housed inside the recessed portion 12a of the first outer encasement member 12. The first outer encasement member 12 and the second outer encasement member 13 are overlaid, and the flared portion 12b of the first outer encasement member 12 and the surface end portion of the second outer encasement member 13 are joined. At this time, the inside of the recessed portion 12a may be drawn to a vacuum, for deaerating thereof.

### 3. Effects etc.

According to the all-solid-state battery 10 of the present disclosure, the projections 15 provided on the outer encasement member 11 provided here take up excess of the outer encasement member (laminate sheet) due to twisting that causes wrinkles to occur. Occurrence of wrinkles, which are the starting points of cracks, is suppressed, and accordingly the occurrence of cracks is suppressed, and heat cycle resistance (resistance to occurrence of cracks in the outer encasement member) is improved.

Also, the strength of the portions where wrinkles are generated can be improved by the projections 15, and from this perspective, occurrence of cracks can be suppressed.

The outer encasement member (laminate film in particular) is vulnerable to heat cycles (repeated rising and falling temperatures), and when wrinkles occur at the corner portions, stress is concentrated thereat, raising the possibility of cracks occurring. The occurrence of cracks can damage the outer encasement member, and cause deterioration of the battery. In contrast to this, such problems can be suppressed by the all-solid-state battery 10. In conventional examples, there are cases in which wrinkles occur during fabrication of all-solid-state batteries, and cases of occurring during use or during heat cycle testing, but according to the present disclosure, the occurrence of wrinkles can be suppressed in any situation.

It should be noted that, as described above, the projections may form hollows, and the projections may appear to be deformed, such as being crushed, during the process of manufacturing the battery. However, the effects can be obtained even in a deformed state, as long as the projections have the above-described form even though not discernibly. Accordingly, whether the shape of the projections is within the scope of the present disclosure can be determined from any one of a state in which the battery has been fabricated and become a battery, a state before combining the electrode body with the outer encasement member, and a state of disassembling the battery from the battery state and separating the electrode body from the outer encasement member.

### 4. Other examples

In addition to the above, an all-solid-state battery can be configured as illustrated in FIG. 9. FIG. 9 is a diagram corresponding to FIG. 6. In the example illustrated in FIG. 9, the second outer encasement member 13 is not used, and two first outer encasement members 12 are overlaid to form an outer encasement member. Accordingly, the opening sides of the recessed portions 12a of the two first outer encasement members 12 are overlaid on each other, and the flared portions 12b thereof are overlaid on each other, and the two flared portions 12b form the joint portion 11a.

In this embodiment, projections 15 are disposed at the corner portions of the electrode body 14, on both sides in the thickness direction of the electrode body 14 (up-down direction in the plane of the drawing, lamination direction of the layers in the laminate 14c of the electrode body 14). Accordingly, as illustrated in FIG. 9, in the present embodiment, the projections 15 are disposed overlaying each other.

The same effects as described above can be obtained by a battery according to such an embodiment as well.

Also, in the configuration of the above-described embodiment, the two outer encasement members, i.e., the first outer encasement member 12 and the second outer encasement member 13, are joined together, but this is not restrictive, and an embodiment may be made in which a single outer encasement member material is folded in half, the electrode body is disposed interposed therebetween, and the outer peripheral end portions of the three sides are joined.

### 5. Example

### 5.1. Configuration of Electrode Body

An electrode body was formed by a known method. The specifications of each layer of the electrode body are as follows.
- Anode current collector layer: material was 1000 series aluminum, thickness was 10 µm
- Anode composite material layer: material was NMC-based, thickness was 50 µm
- Separator layer: material was sulfide solid electrolyte, thickness was 30 µm
- Cathode composite material layer: material was lithium titanate, thickness was 50 µm
- Cathode current collector layer: material was 1000 series aluminum, thickness was 10 µm
- Dimensions of electrode body: 100 mm × 200 mm in plan view, total thickness was 5 mm

### 5.2. Form of Outer Encasement Member

The outer encasement member was made by processing a laminated sheet. The laminate sheet was made up of three layers, which were an insulating resin layer made of polyethylene terephthalate (PET), a metal layer made of aluminum, and a sealing resin layer (sealant material layer) made of polypropylene (PP), and the thickness thereof was 0.15 mm.

The outer shape thereof was 120 mm × 220 mm in plan view, the outer shape of the recessed portion was 100 mm × 200 mm in plan view, the height of the recessed portion (T in FIG. 3B) was 5 mm, the edge was rounded chamfering with a curvature radius of 1 mm.

Also, the height of the projections (H in FIG. 3B) was 2.5 mm, the protrusion amount (L in FIG. 3B) thereof was 3 mm, and the width (W in FIG. 2B) thereof was 3 mm.

### 5.3 Fabrication of All-Solid-State Battery

In the example, the electrode body was sealed in the outer encasement member having the projections.
In a comparative example, the electrode body was sealed in an outer encasement member having no projections.

### 5.4. Test method

A heat cycle test was performed on the all-solid-state battery that was fabricated. Specifically, the prescribed temperature on the high temperature side was 100°C, and the prescribed temperature on the low temperature side was -20°C, with each cycle being set to 30 minutes, and this cycle being repeated 2000 times. The all-solid-state battery that was fabricated was placed in a constant temperature bath that exchanges high and low-temperature air layers, and inside of the layer was made to reach the prescribed temperature in around 10 minutes, and testing was carried out such that the temperature of the all-solid-state battery was at the prescribed temperature for at least five minutes or more.

### 5.5. Results

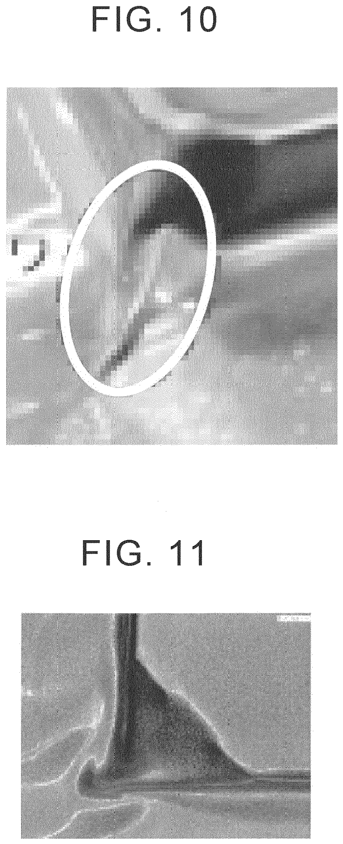

As a result of the testing, in the comparative example, wrinkles occurred at the corner portions of the outer encasement member during fabrication as shown in FIG. 10, and cracks occurred in the outer encasement member after 300 cycles in the heat cycle test. On the other hand, in the example, no wrinkles occurred as shown in FIG. 11, and no cracks occurred even after 2000 cycles in the heat cycle test.

## Claims

1. A battery (10) comprising an outer encasement member (11) configured to accommodate an electrode body (14) that is quadrilateral in plan view, wherein:
the outer encasement member (11) has a recessed portion (12a) that is quadrilateral in plan view and configured to accommodate the electrode body (14), and is provided with a joint portion (11a) at an outer peripheral end portion; and
a corner portion of the recessed portion (12a) is provided with a projection (15) extending toward the joint portion (11a).

2. The battery (10) according to claim 1, wherein the projection (15) defines a hollow between the joint portion (11a) and the electrode body (14) inside the outer encasement member (11).

3. The battery (10) according to claim 1 or 2, wherein:
the outer encasement member (11) includes a first outer encasement member (12) and a second outer encasement member (13); and
the joint portion (11a) is configured by joining an outer peripheral end portion of the first outer encasement member (12) and an outer peripheral end portion of the second outer encasement member (13).

4. The battery (10) according to any one of claims 1 to 3, wherein the projection (15) includes an inclined face (15b) that is inclined toward the joint portion (11a) in a thickness direction of the battery (10).
